# EUROPEAN PATENT SPECIFICATION

(11) **EP 3 595 186 B1**
(45) Date of publication and mention of the grant of the patent: **09.03.2022**
(21) Application number: 19185422.3
(22) Date of filing: 10.07.2019
(51) Int. Cl.: H04B 7/024, H04W 88/08

(54) **DISTRIBUTED ANTENNA SYSTEM AND OPERATING METHOD THEREOF**
VERTEILTES ANTENNENSYSTEM UND BETRIEBSVERFAHREN DAFÜR
SYSTÈME D'ANTENNE DISTRIBUÉ ET SON PROCÉDÉ DE FONCTIONNEMENT

(30) Priority: 10.07.2018 KR 20180080096
(43) Date of publication of application: 15.01.2020
(73) Proprietor: SOLiD, INC., Gyeonggi-do (KR)
(72) Inventor: KIM, Ok Jin, Gyeonggi-do 13493 (KR)
(74) Representative: Frenkel, Matthias Alexander

(56) References cited:
- US-A1- 2014 269 318
- US-A1- 2015 092 651
- US-A1- 2015 181 615

## Description

### BACKGROUND

### 1. Field

The disclosure relates to a distributed antenna system and a method of operating the distributed antenna system, and more particularly, to a service capacity distribution.

### 2. Description of the Related Art

A distributed antenna system is an antenna system that is used to spatially distribute a plurality of antennas to solve high traffic capacity problems in an indoor environment or a certain area.

The distributed antenna system is installed in buildings, tunnels, subways, etc. to provide communication services even to a shadow area where base transceiver station signals are difficult to reach. The distributed antenna system is also used to provide smooth services in stadiums, large-sized facilities, and places where service demand is high.

As such, the distributed antenna system is a system for supplementing the limited output and coverage of a base transceiver station, and is widely used to solve a service shadow area.

In recent years, as communication services have developed mainly in data communication, the distributed antenna system are being developed not only to expand a communication service area, but also to provide various services in combination.

Meanwhile, since the distributed antenna system provides a communication service using a certain number of antennas in a limited space, the service capacity and the service scope may be limited.

On the other hand, since the amount of communication service usage and the users are very flexible, the distributed antenna system having the fixed service capacity and service scope is somewhat limited in maintaining the service quality.

Therefore, it is necessary to maintain and improve the service quality in the distributed antenna system even if the amount of communication service usage changes and the users move.

US 2015/092651 A1 outlines automated control of simulcast ratios based on network traffic data. In the document it is disclosed that a remote switching matrix can be utilized at a venue to couple remote transceiver units (RTUs) with different antenna ports, for example, of one or more multi-beam antennas deployed at the venue, a simulcast ratio that can be utilized to support traffic demand at the venue can be determined and implemented by creating dynamic connections between the RTUs and the antenna ports, the simulcast ratio can be modified based on changes in network traffic at the venue that are monitored via self-organizing network devices, and one or more antenna beams of the multi-beam antennas are remotely steered or rotated based on a location of the traffic.

US 2015/181615 A1 relates to capacity management for a distributed antenna system. In the document, a distributed antenna system is described to comprise a host unit, a plurality of remote antenna units coupled to the host unit via a plurality of communication links, wherein the plurality of communication links transport a radio frequency (RF) carrier signal between the host unit and at least one wireless subscriber unit via the plurality of remote units, and at least one capacity processor, wherein the capacity processor alters at least a portion of the RF carrier signal such that the at least one wireless subscriber unit can utilize a bandwidth of the RF carrier signal that is less than a full available bandwidth of the RF carrier signal.

US 2014/269318 A1 discloses an architecture for a Digital Capacity Centric Distributed Antenna System (DCC-DAS) that dynamically manages and distributes resources in different locations where there is demand for capacity. In the document the DCC-DAS is described to allow routing of resources to other applications such as location finding devices, jamming devices, repeaters, etc.

### SUMMARY

Preferred embodiments of the present disclosure are provided as defined in the appended claims. Provided are a distributed antenna system and a method of operating the distributed antenna system capable of maintaining and improving the service quality in the distributed antenna system by dynamically distributing the service capacity.

Further, provided are analyzing a usage pattern in each coverage according to an operating state of remote units in the distributed antenna system and distributing the service capacity according to the analyzed usage pattern.

Further, provided are predicting the service capacity in the distributed antenna system and adapting the predicted service capacity to respond to the change in service demand in advance.

The inventive concept is not limited to the above objectives, but other objectives not described herein may be clearly understood by those of ordinary skilled in the art from descriptions below.

According to an aspect of a disclosure, a service capacity distribution method of a distributed antenna system, the service capacity distribution method includes monitoring an operating state of each of a plurality of remote units; analyzing a usage pattern for the plurality of service units based on the monitored operating state; and distributing the service capacity of each of the plurality of remote units based on the analyzed usage pattern, wherein the analyzing of the usage pattern comprises analyzing a movement pattern for a movement direction and movement time of users based on a change in an uplink signal power and a downlink signal power between adjacent remote units.

According to an example, wherein the monitoring of the operating state may include monitoring at least one of throughput, the amount of uplink transmission, the amount of downlink transmission, and an operating power of each of the plurality of remote units.

According to an example, wherein the distributing of the service capacity may include distributing the service capacity of each of the plurality of remote units corresponding to a direction in accordance with the movement pattern based on the analyzed movement pattern.

According to an example, wherein the analyzing of the usage pattern may include analyzing a usage change pattern within coverage of each of the plurality of remote units, based on the operating state within the coverage of each of the plurality of remote units.

According to an example, wherein the distributing of the service capacity may include distributing the service capacity of each of the plurality of remote units corresponding to the usage change pattern based on the analyzed usage change pattern.

According to an example, wherein the service capacity distribution method may further include predicting the service capacity of each of the plurality of remote units based on the analyzed usage pattern, wherein the distributing of the service capacity may include distributing the service capacity of each of the plurality of remote units based on the predicted service capacity.

According to an example, wherein the predicting of the service capacity may include predicting the service capacity of each of the plurality of remote units for each time period, and the distributing of the service capacity of each of the plurality of remote units based on the predicted service capacity may include distributing the service capacity of each of the plurality of remote units based on the predicted service capacity for each time period.

According to an example, wherein the distributing of the service capacity may include distributing the service capacity of each of the plurality of remote units for each service channel, based on the analyzed usage pattern for each service channel.

According to another aspect of the disclosure, a sub-system for distributing a service capacity of a distributed antenna system, the sub-system includes a monitoring module configured to monitor an operating state of each of a plurality of remote units; a pattern analysis module configured to analyze a usage pattern for the plurality of service units based on the monitored operating state; and a capacity distribution module configured to distribute the service capacity of each of the plurality of remote units based on the analyzed usage pattern, wherein analyzing of the usage pattern comprises analyzing a movement pattern for a movement direction and movement time of users based on a change in an uplink signal power and a downlink signal power between adjacent remote units.

According to an example, wherein the monitoring module may be configured to monitor at least one of throughput, the amount of uplink transmission, the amount of downlink transmission, and an operating power of each of the plurality of remote units.

According to an example, wherein the capacity distribution module may be configured to distribute the service capacity of each of the plurality of remote units corresponding to a direction in accordance with the movement pattern based on the analyzed movement pattern.

According to an example, wherein the pattern analysis module may be configured to analyze a usage change pattern within coverage of each of the plurality of remote units, based on the operating state within the coverage of each of the plurality of remote units.

According to an example, wherein the capacity distribution module may be configured to distribute the service capacity of each of the plurality of remote units corresponding to the usage change pattern based on the analyzed usage change pattern.

According to an example, wherein the pattern analysis module may be configured to predict the service capacity of each of the plurality of remote units based on the analyzed usage pattern, and the capacity distribution module may be configured to distribute the service capacity of each of the plurality of remote units based on the predicted service capacity.

According to an example, wherein the pattern analysis module may be configured to predict the service capacity of each of the plurality of remote units for each time period, and the capacity distribution module may be configured to distribute the service capacity of each of the plurality of remote units based on the predicted service capacity for each time period.

According to an example, wherein the capacity distribution module may be configured to distribute the service capacity of each of the plurality of remote units for each service channel, based on the analyzed usage pattern for each service channel.

### BRIEF DESCRIPTION OF THE DRAWINGS

These and/or other aspects will become apparent and more readily appreciated from the following description of the embodiments, taken in conjunction with the accompanying drawings in which:
FIG. 1 is a conceptual diagram of a distributed antenna system according to an embodiment;
FIG. 2 is a block diagram of a configuration of a main unit according to various embodiments;
FIG. 3 is a block diagram of a configuration of a transceiver module according to various embodiments;
FIG. 4 is a block diagram of a configuration of a hub unit according to various embodiments;
FIG. 5 is a block diagram of a configuration of a remote unit according to various embodiments;
FIG. 6 is a block diagram of a configuration of a node device according to various embodiments covering the present invention;
FIGS. 7 and 8 are block diagrams of a capacity distribution sub-system according to various embodiments;
FIG. 9 is a flowchart of a method of operating a distributed antenna system according to various embodiments covering the present invention;
FIG. 10 is an exemplary view of the arrangement of a remote unit according to an embodiment;
FIGS. 11 and 12 are conceptual diagrams of service capacity distribution according to various embodiments;
FIGS. 13 and 14 are conceptual diagrams of service distribution according to a user movement pattern according to various embodiments;
FIG. 15 is a flowchart of a method of operating a distributed antenna system according to various embodiments;
FIGS. 16 and 17 are conceptual diagrams of service capacity distribution according to a predicted service capacity, according to various embodiments; and
FIG. 18 is an exemplary view of a configuration including a plurality of main units according to various embodiments.

### DETAILED DESCRIPTION

The disclosure may be variously modified and have various embodiments, so that specific embodiments will be illustrated in the drawings and described in the detailed description. However, this does not limit the disclosure to specific embodiments, and it should be understood that the disclosure covers all the modifications and replacements included within the idea and technical scope of the disclosure.

In describing the disclosure, in the following description, a detailed explanation of known related technologies may be omitted to avoid unnecessarily obscuring the subject matter of the disclosure. In addition, numeral figures (for example, 1, 2, and the like) used during describing the disclosure are just identification symbols for distinguishing one element from another element.

Further, in the disclosure, if it is described that one component is "connected" or "accesses" the other component, it is understood that the one component may be directly connected to or may directly access the other component but unless explicitly described to the contrary, another component may be "connected" or "access" between the components.

In addition, terms including "unit", "er", "or", "module", and the like disclosed in the disclosure mean a unit that processes at least one function or operation and this may be implemented by hardware or software such as a processor, a micro processor, a micro controller, a central processing unit (CPU), a graphics processing unit (GPU), an accelerated Processing unit (APU), a digital signal processor (DSP), an application specific integrated circuit (ASIC), and a field programmable gate array (FPGA) or a combination of hardware and software.

Moreover, it is intended to clarify that components in the disclosure are distinguished in terms of primary functions of the components. That is, two or more components to be described below may be provided to be combined to one component or one component may be provided to be divided into two or more components for each more subdivided function. In addition, each of the respective components to be described below may additionally perform some or all functions among functions which other components take charge of in addition to a primary function which each component takes charge of and some functions among the primary functions which the respective components take charge of are exclusively charged by other components to be performed, of course. The invention is defined by the independent claims 1, 9. Preferred embodiments of the invention are stipulated in the dependent claims. While several embodiments and/or examples have been disclosed in the description, the subject matter for which protection is sought is strictly and solely limited to those embodiments and/ or examples encompassed by the scope of the appended claims. Embodiments and/or examples mentioned in the description that do not fall under the scope of the claims are useful for understanding the invention.

Hereinafter, embodiments of the disclosure will be described in detail in order.

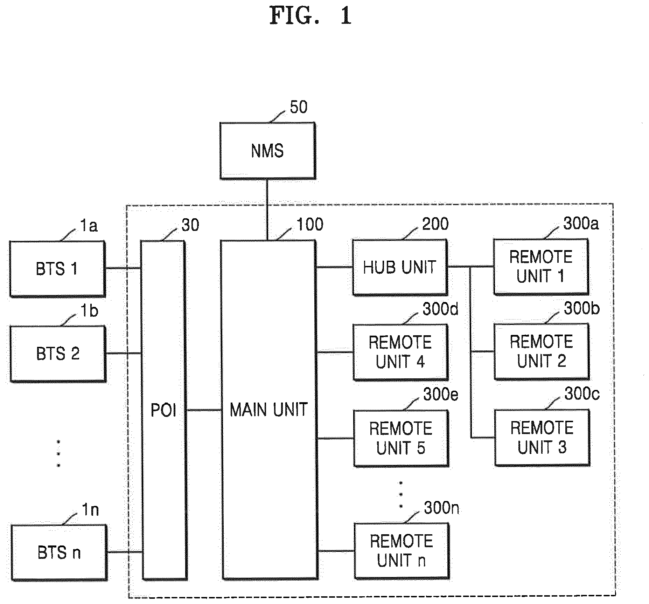

FIG. 1 is a conceptual diagram of a distributed antenna system 10 according to an embodiment.

Referring to FIG. 1, the distributed antenna system 10 may include a point of interface (POI) 30, a main unit 100, a hub unit 200, and a remote unit 300. The POI 30 and the main unit 100 may be referred to as a head end, or the main unit 100 may be referred to as a head end.

The POI 30 may be connected to each of a plurality of base transceiver stations (BTSs) 1a to In and may receive BTS signals corresponding to a downlink from the plurality of connected BTSs 1a to In. The POI 30 may transmit the processed BTS signals to the main unit 100.

The POI 30 may process signals received from the BTSs 1a to In to be processed by the distributed antenna system 10 and may transmit terminal signals received and processed by the distributed antenna system 10 to the BTSs 1a to In.

For example, the POI 30 may attenuate a BTS signal of a high power level and convert the BTS signal to a suitable level for the distributed antenna system 10 or may separate the BTS signals transmitted from the BTSs 1a to In into a downlink and an uplink. In addition, the POI 30 may attenuate the terminal signals processed by the distributed antenna system 10 so as to be suitable for the BTSs 1a to In.

Here, the POI 30 may be referred to as a signal matching device.

The main unit 100 may be connected to the POI 30, the hub unit 200, and a plurality of remote units 300 through a communication medium. The communication medium may include an optical fiber, a coaxial cable, or the like.

The main unit 100 may transmit a received BTS signal to the hub unit 200 and the remote unit 300.

For example, the main unit 100 may convert a radio frequency (RF) signal into a digital signal and may distribute the converted digital signal to the hub unit 200 and the remote unit 300.

In more detail, the main unit 100 may distribute the converted digital signal so as to transmit the converted digital signal to the remote unit 300 corresponding to an area where the received RF signal is to be output.

The main unit 100 may be connected to another main unit and may transmit or receive a BTS signal or a terminal signal to or from the connected main unit. The BTS signal may refer to a downlink signal, and the terminal signal may refer to an uplink signal.

The main unit 100 may distribute or redistribute the capacity for communication service. The capacity may mean service capacity.

The main unit 100 may distribute or redistribute the capacity for each service channel.

In addition, the main unit 100 may perform signal conversion between a frequency division duplex (FDD) scheme and a time division duplex (TDD) scheme. For example, the main unit 100 may convert an FDD carrier into a TDD carrier and convert the TDD carrier into the FDD carrier. The carrier may include data according to a service signal or may be referred to as a service signal.

The main unit 100 may also be referred to as a distribution & aggregation unit (DAU).

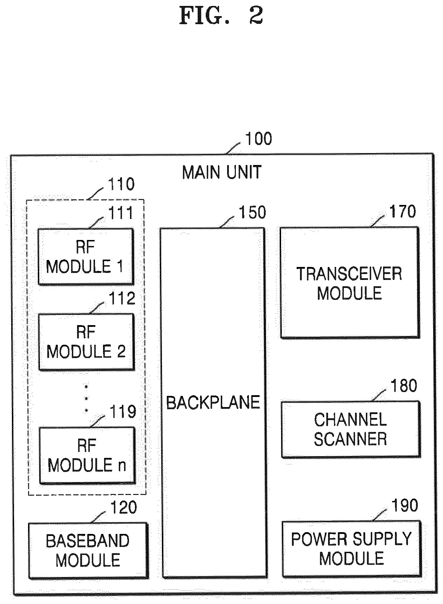

A configuration of the main unit 100 will be described in detail with reference to FIG. 2.

FIG. 2 is a block diagram of the configuration of the main unit 100 according to various embodiments.

Referring to FIG. 2, the main unit 100 may include an RF module 110, a baseband module 120, a backplane 150, a transceiver module 170, and a power supply module 190. The main unit 100 may include a channel scanner 180, which will be described later below, or may be connected to the channel scanner 180, which is an external device.

The RF module 110 may include a plurality of RF modules 111 to 119.

In an embodiment, the plurality of RF modules 111 to 119 may receive and transmit RF signals of different bands, respectively.

In another embodiment, the plurality of RF modules 111 to 119 may be connected to respective base transceiver stations to receive a downlink signal and transmit an uplink signal.

The RF module 110 may attenuate the downlink signal and convert the downlink signal to a digital signal. For example, the RF module 110 may attenuate an RF signal, which is a downlink signal, and may convert the RF signal into a digital signal.

The RF module 110 may convert an uplink signal into an RF signal and amplify the RF signal. For example, the RF module 110 may convert a digital signal, which is an uplink signal, into an RF signal and may amplify the RF signal.

The RF module 110 may include an analog to digital converter (ADC) and a digital to analog converter (DAC) for conversion between an analog signal and a digital signal.

The baseband module 120 may include a digital signal interface and may receive digital signals.

In more detail, the baseband module 120 may interface and receive a digital signal of the same standard as a common public radio interface (CPRI) or an open baseband remote radiohead interface (OBSAI).

For example, the baseband module 120 may interface with a centralized radio access network (C-RAN), a radio access exchange (RAX), an integrated BTS (all-in-one BTS), or the like.

The backplane 150 may be connected to the POI 30, the RF module 110, the baseband module 120, the transceiver module 170, and the power supply module 190. For example, the backplane 150 may include at least one type of interface module that may be connected to the configurations described above. Therefore, the backplane 150 may form a data bus structure in the main unit 100.

The backplane 150 may distribute signals and power and may perform high-speed signal routing. In addition, the backplane 150 may provide power and input/output (I/O) signals to the POI 30.

The backplane 150 may also be referred to as a main board.

The transceiver module 170 may be connected to the hub unit 200 and the remote unit 300.

The transceiver module 170 may interface the RF module 110 and the baseband unit 120 with the hub unit 200 and the remote unit 300.

In addition, the transceiver module 170 may support extension for interfacing with another main unit. Accordingly, the main unit 100 may be connected to another main unit through the transceiver module 170.

The transceiver module 170 may aggregate signals received from the RF module 110 and the baseband unit 120 and may distribute the signals to the hub unit 200 and the remote unit 300. For example, the transceiver module 170 may distribute the aggregated signals to the hub unit 200 and the remote unit 300 through optical ports.

The transceiver module 170 may perform noise rejection filtering and rate conversion.

The transceiver module 170 may perform band distribution according to signal transmission or may perform sectorization. In addition, the transceiver module 170 may perform single input single output (SISO) / multiple input multiple output (MIMO) signal routing.

The transceiver module 170 may control and monitor a system status.

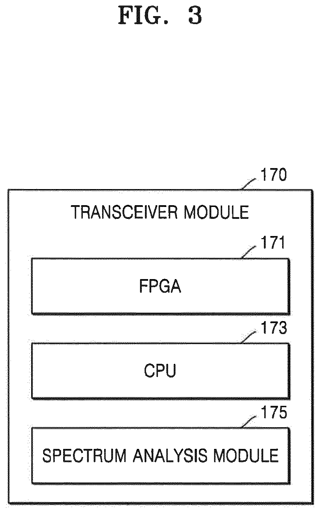

A configuration of the transceiver module 170 will be described with reference to FIG. 3.

FIG. 3 is a block diagram of the configuration of the transceiver module 170 according to various embodiments.

Referring to FIG. 3, the transceiver module 170 may include an FPGA 171, a CPU 173, and a spectrum analysis module 175.

The FPGA 171 and the CPU 173 may perform functions of the transceiver module 170 described above.

The spectrum analysis module 175 may display and analyze a spectrum.

The spectrum analysis module 175 may display a spectrum waveform. For example, the spectrum analysis module 175 may display and analyze an adjacent channel leakage power ratio (ACLR), a channel power, an OBW, a spectrum emission mask, and the like.

The spectrum analysis module 175 may sense various pieces of information by analysis. For example, the spectrum analysis module 175 may detect a protocol, a carrier, a region, a band, an MIMO, a sector, and the like.

Also, the spectrum analysis module 175 may measure error vector magnitude (EVM).

Referring again to FIG. 2, the main unit 100 may include the channel scanner 180 or may be connected to the channel scanner 180, which is an external device, to obtain various pieces of information from the channel scanner 180.

The channel scanner 180 may also be referred to as a decoding device or a decoding subrack.

The channel scanner 180 may determine information related to a channel frequency, a bandwidth, a mobile network code (MNC), a mobile country code (MCC), a channel power, a pilot power, a reference signal received power (RSRP), a cell ID, and an SISO/MIMO of a received signal. The channel scanner 180 may transmit the determined information to at least one component included in the main unit 100.

The channel scanner 180 may also perform spectral analysis of the received signal.

The power supply module 190 may convert an input/output power. For example, the power supply module 190 may convert the input/output power from an alternating current (AC) to a direct current (DC) or from the DC to the AC.

The description of the configurations of the main unit 100 described above is an example, and a configuration other than the configurations described above may be further included in the description, and some of the configurations described above may not be included in the description.

Further, the main unit 100 may include at least one processor and a memory, and instructions stored in the memory may be configured to be executed by the processor.

Referring again to FIG. 1, the hub unit 200 may be connected to the main unit 100 and the remote unit 300. For example, the hub unit 200 may be connected to the main unit 100 and a plurality of remote units 300 through an optical fiber.

The hub unit 200 may be connected between the main unit 100 and the remote unit 300 to expand connection capacity between the main unit 100 and the remote unit 300. For example, the hub unit 200 may be connected to the main unit 100 and may be connected to first to third remote units 300a to 300c. Therefore, the main unit 100 may be directly connected to fourth to n^{th} remote units 300d to 300n and may be connected to the first to third remote units 300a to 300c through the hub unit 200.

In another embodiment, the distributed antenna system 10 may be configured with a topology in which the remote unit 300 is connected to the main unit 100 through the hub unit 200.

The hub unit 200 may transmit signals between the connected main unit 100 and the remote unit 300.

For example, the hub unit 200 may convert a digital signal transmitted from the main unit 100 into an Ethernet format and may transmit data converted into the Ethernet format to the remote unit 300.

The hub unit 200 may supply power to the remote unit 300. For example, the hub unit 200 may supply power to the connected remote unit 300 through power of Ethernet (PoE).

The hub unit 200 may monitor current for each of the plurality of connected remote units 300 and may automatically shut off the power according to the monitoring.

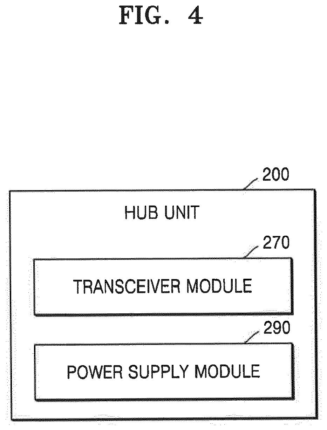

A configuration of the hub unit 200 will be described with reference to FIG. 4.

FIG. 4 is a block diagram of the configuration of the hub unit 200 according to various embodiments.

Referring to FIG. 4, the hub unit 200 may include a transceiver module 270 and a power supply module 290.

The transceiver module 270 may include a port for interfacing with the main unit 100 and may include a port for interfacing with other hub units in a daisy chain fashion.

The transceiver module 270 may control and monitor a system status.

In addition, the transceiver module 270 may perform functions of the hub unit 200 described above.

The power supply module 290 may supply power to a component included in the hub unit 200 and may supply power to the connected remote unit 300.

Referring again to FIG. 1, the remote unit 300 may be directly connected to the main unit 100 or may be connected to the main unit 100 through the hub unit 200.

The remote unit 300 may output a signal transmitted from the main unit 100 through an antenna and may transmit a terminal signal received through the antenna to the main unit 100.

The remote unit 300 may be divided into a high power and a low power according to an output. The low power remote unit may be referred to as a low power radio node, and the high power remote unit may be referred to as a high power radio node.

The remote unit 300 may include an integrated antenna and may be connected to an external antenna through an external antenna port.

In addition, the remote unit 300 may include or be connected to a plurality of directional antennas such that the remote unit 300 may transmit/receive signals to/from a specific area or a specific sector. For example, the remote unit 300 may include at least one sector antenna or may be connected to the sector antenna. In addition, the remote unit 300 may include or be connected to an omnidirectional antenna or a directional antenna.

The remote unit 300 may selectively operate only some of the integrated antenna and the external antenna.

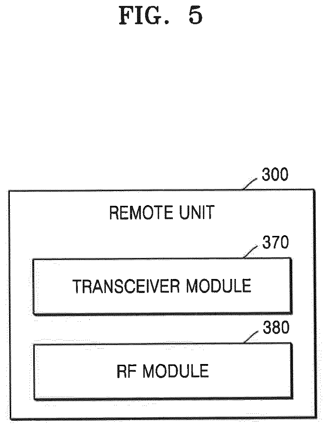

A configuration of the remote unit 300 will be described with reference to FIG. 5.

FIG. 5 is a block diagram of the configuration of the remote unit 300 according to various embodiments.

Referring to FIG. 5, the remote unit 300 may include a transceiver module 370 and an RF module 380.

The transceiver module 370 and the RF module 380 may perform functions of the remote unit 300 described above.

The transceiver module 370 may perform sectorization and MIMO signal routing.

The transceiver module 370 may convert a digital signal into a downlink RF signal and an uplink RF signal into a digital signal. In addition, the transceiver module 370 may apply digital filtering when converting the uplink RF signal to the digital signal.

The transceiver module 370 may control and monitor a system status.

The transceiver module 370 may support remote access via WiFi connection.

The RF module 380 may include an integrated antenna, or may include a duplexer filter or a band pass filter (BPF) filter.

The RF module 380 may amplify and filter a downlink RF signal.

The RF module 380 may filter and amplify an uplink RF signal.

The RF module 380 may select connection between internal antenna port and an external antenna port and use of the internal antenna port and the external antenna port. In addition, the RF module 380 may include a mechanical connector for selection between the internal antenna port and the external antenna port.

The internal antennas integrated in the RF module 380 may be included in various combinations.

Referring again to FIG. 1, a network management system (NMS) 50 may manage a network including the distributed antenna system 10. For example, the NMS 50 may monitor and control components included in the distributed antenna system 10, for example, the state and operation of one node.

The description of the distributed antenna system 10 described above is merely an example for explanation, and may vary according to a designer's or user's selection. Therefore, the distributed antenna system 10 may be implemented in an analog processing configuration other than the digital processing configuration described above, or may be implemented by mixing the digital processing configuration and the analog processing configuration.

Based on the configuration and description of the distributed antenna system 10 described above, a distributed antenna system and a method of operating the distributed antenna system according to various embodiments will be described.

The distributed antenna system 10 according to various embodiments may monitor an operating state of each of a plurality of remote units and analyze a usage pattern for the plurality of remote units based on the monitored operating state. The distributed antenna system 10 may distribute the service capacity of each of the plurality of remote units based on the analyzed usage pattern. Thus, the distributed antenna system 10 according to various embodiments may distribute the service capacity according to the analyzed usage pattern, and may dynamically distribute the service capacity according to a service environment and a service state.

Hereinafter, it will be described in detail.

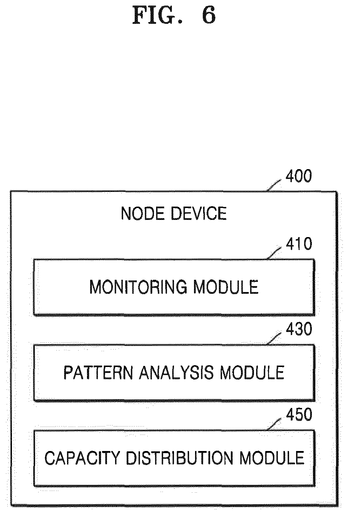

A configuration of a node device 400 for dynamically distributing the service capacity will be described with reference to FIGS. 6 to 8.

FIG. 6 is a block diagram of the configuration of the node device 400 according to various embodiments covering the present invention.

Referring to FIG. 6, the node device 400 includes a monitoring module 410, a pattern analysis module 430, and a capacity distribution module 450.

The node device 400 may be included in the distributed antenna system 10 or may be included in one or more components included in the distributed antenna system 10. For example, the node device 400 may be included in one of the main unit 100, the hub unit 200, and the remote unit 300 described above, or may be included in a plurality of units among the main unit 100, the hub unit 200, and the remote unit 300. Implementation of the node device 400 will be described later below.

The monitoring module 410 monitors an operating state of each of the plurality of remote units 300 included in the distributed antenna system 10.

Here, the operating state may include a state related to the operation of each of the remote units 300, as well as a state related to a service environment associated with each of the remote units 300.

For example, the monitoring module 410 may monitor at least one of throughput, the amount of uplink transmission, the amount of downlink transmission, and an operating power of each of the plurality of remote units 300 included in the distributed antenna system 10. Here, the amount of uplink transmission and the amount of downlink transmission may include a change amount of uplink transmission, a change amount of downlink transmission, and a ratio between the amount of uplink change and the amount of downlink change between an uplink and a downlink.

Here, the operating power may mean power consumption for a specific area of the remote unit 300 in the entire service area of the distributed antenna system 10.

Here, the amount of uplink change and the amount of downlink change may be the amount of change associated with an uplink signal and a downlink signal in each of the plurality of remote units 300, respectively. For example, the amount of uplink change and the amount of downlink change may include power variation of the uplink signal and the downlink signal, and may include variation of a modulation type of each of the uplink signal and the downlink signal, respectively. Furthermore, the amount of uplink change and the amount of downlink change may be a change amount of uplink signal transmission and a change amount of downlink signal transmission in each of the plurality of remote units 300, respectively.

The monitoring module 140 may monitor a service channel state of each of the plurality of remote units 300. Therefore, the monitoring module 140 may monitor the above-described operating state output from each of the remote units 300 for each service channel.

A plurality of monitoring modules 410 may monitor the plurality of remote units 300 by area, respectively.

The monitoring module 410 may be a component included in one of the main unit 100, the hub unit 200, and the remote unit 300 described above, or may correspond to a component included in one of the main unit 100, the hub unit 200, and the remote unit 300.

The pattern analysis module 430 analyzes a usage pattern for the plurality of remote units 300 based on the monitored operating state of each of the plurality of remote units.

For example, the pattern analysis module 430 may analyze a movement pattern of a user within the coverage of a plurality of remote units. Here, the movement pattern of the user may mean a movement pattern of a user having a terminal. In more detail, the pattern analysis module 430 may analyze a movement pattern for a movement direction and movement time of users within the coverage of the plurality of remote units.

As another example, the pattern analysis module 430 may analyze a change pattern of the number of users within the coverage of a plurality of remote units based on the monitored operating state. Here, the change pattern of the number of users may mean a pattern of increase/decrease in the number of users.

As another example, the pattern analysis module 430 may analyze a usage pattern within the coverage of the plurality of remote units. The usage pattern may mean a pattern of usage for each of a downlink and an uplink within the coverage of each of the plurality of remote units. For example, the pattern analysis module 430 may analyze an increase/decrease pattern of usage in the coverage of each of the plurality of remote units.

Meanwhile, the pattern analysis module 430 may perform the above-described pattern analysis based on geographical positions in the service area of the distributed antenna system 10, and may perform the above-described pattern analysis based on the coverage. In addition, the geographic position or the coverage may be divided into a plurality of areas or a plurality of sectors.

As described above, the pattern analysis module 430 may analyze and derive a pattern of a user (terminal) to be serviced, a pattern of the service capacity, and the like based on the monitored operating state.

In addition, the pattern analysis module 430 may predict the service capacity of each of the plurality of remote units 300 based on the analyzed usage pattern.

For example, the pattern analysis module 430 may predict the service capacity of each of the plurality of remote units 300 for each time period based on the analyzed usage pattern.

As another example, the pattern analysis module 430 may predict the service capacity of each of the plurality of remote units 300 by time and service channel based on the analyzed usage pattern.

The pattern analysis module 430 may be a component included in one of the main unit 100, the hub unit 200, and the remote unit 300 described above, or may correspond to a component included in one of the main unit 100, the hub unit 200, and the remote unit 300.

The capacity distribution module 450 distributes the service capacity of each of the plurality of remote units 300 based on the analyzed usage pattern. Here, the service capacity distribution may mean increasing, decreasing, or maintaining the service capacity.

For example, the capacity distribution module 450 may increase, decrease, and maintain the service capacity of each of the plurality of remote units 300 based on the analyzed usage pattern.

In an embodiment, the capacity distribution module 450 may increase, decrease, and maintain the service capacity of each of the plurality of remote units 300 according to the analyzed movement pattern.

In another embodiment, the capacity distribution module 450 may increase, decrease, and maintain the service capacity of each of the plurality of remote units 300 according to an analyzed change pattern of a movement amount.

Also, the capacity distribution module 450 may increase, decrease, and maintain the service capacity of each of the plurality of remote units 300 for each service channel based on the analyzed usage pattern. Therefore, the capacity distribution module 450 may adjust the service capacity output from each of the plurality of remote units 300 for each service channel, based on the analyzed usage pattern.

Meanwhile, the capacity distribution module 450 may distribute the service capacity of each of the plurality of remote units 300 based on the predicted service capacity as well as the analyzed movement pattern.

For example, the capacity distribution module 450 may distribute the service capacity of each of the plurality of remote units 300 based on the predicted service capacity for each time period.

As another example, the capacity distribution module 450 may distribute the service capacity of each of the plurality of remote units 300 based on the service capacity predicted for each time and service channel.

The capacity distribution module 450 may be able to provide a service according to the distributed service capacity by using an omnidirectional antenna or a directional antenna included or connected to each of the plurality of remote units 300. For example, the capacity distribution module 450 may provide a service towards a distributed direction or an area of the service capacity by using an omnidirectional antenna or a directional antenna included in or connected to each of the plurality of remote units 300.

The capacity distribution module 450 may be a component included in one of the main unit 100, the hub unit 200, and the remote unit 300 described above, or may correspond to a component included in one of the main unit 100, the hub unit 200, and the remote unit 300.

The above-described node device 400 may include other components besides the monitoring module 410, the pattern analysis module 430, and the capacity distribution module 450. When the node device 400 is included in other components such as the main unit 100, the hub unit 200, the remote unit 300, and the like, the node device 400 may be configured with other components necessary for the corresponding components. Some or all of the components of the node device 400 may be included in the NMS 50.

In addition, the monitoring module 410, the pattern analysis module 430, and the capacity distribution module 450 may be implemented in one or a plurality of components.

Meanwhile, as described above, the node device 400 may be implemented as a plurality of devices, and the node device implemented as a plurality of devices is referred to as a capacity distribution sub-system 500. The capacity distribution sub-system 500 may be a sub-system included in the distributed antenna system 10. Components included in the capacity distribution sub-system 500 may divide and include the components of the node device 400. The above-described node device 400 may be the capacity distribution sub-system 500.

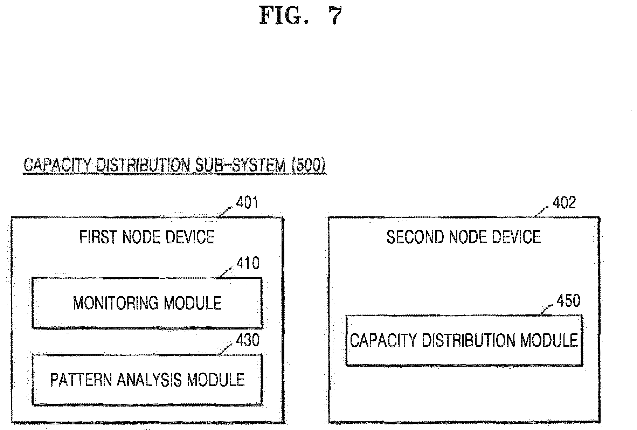

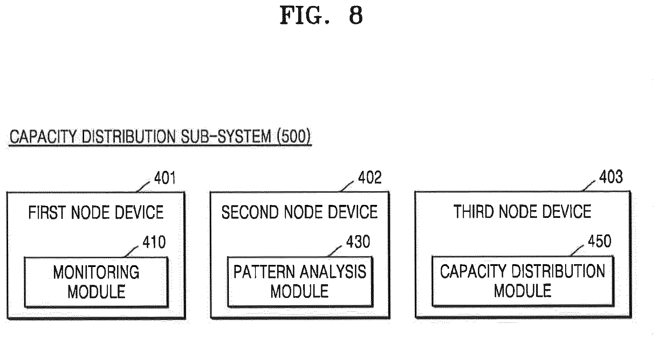

The capacity distribution sub-system 500 will be described with reference to FIGS. 7 and 8.

FIGS. 7 and 8 are block diagrams of the capacity distribution sub-system 500 according to various embodiments.

Referring to FIG. 7, the capacity distribution sub-system 500 may include a first node device 401 and a second node device 402.

The first node device 401 may include the monitoring module 410 and the pattern analysis module 430 and the second node device 402 may include the capacity distribution module 450.

The first node device 401 and the second node device 402 may be different devices in the distributed antenna system 10. For example, the first node device 401 may be the main unit 100 and the second node device 200 may be the hub unit 200. As another example, the first node device 401 may be the main unit 100 and the second node device 402 may be the remote unit 300. As another example, the first node device 401 may be the hub unit 200 and the second node device 402 may be the remote unit 300. In addition to the example described above, the capacity distribution sub-system 500 may be implemented with various combinations of components in the distributed antenna system 10.

Referring to FIG. 8, the capacity distribution sub-system 500 may include the first node device 401, the second node device 402, and a third node device 403.

The first node device 401 may include the monitoring module 410, the second node device 402 may include the pattern analysis module 430, and the third node device 403 may include the capacity distribution module 450.

The first node device 401, the second node device 402 and the third node device 403 may be different devices in the distributed antenna system 10. For example, the first node device 401 may be the main unit 100, the second node device 402 may be the hub unit 200, and the third node device 403 may be the remote unit 300. As another example, the first node device 401 may be the hub unit 200, the second node device 402 may be the main unit 100, and the third node device 403 may be the remote unit 300. In addition to the example described above, the capacity distribution sub-system 500 may be implemented with various combinations of components in the distributed antenna system 10.

Based on the configuration and description of the above-described distributed antenna system 10 and the node device 400, the distributed antenna system 10 and a method of operating the distributed antenna system 100 according to various embodiments will be described.

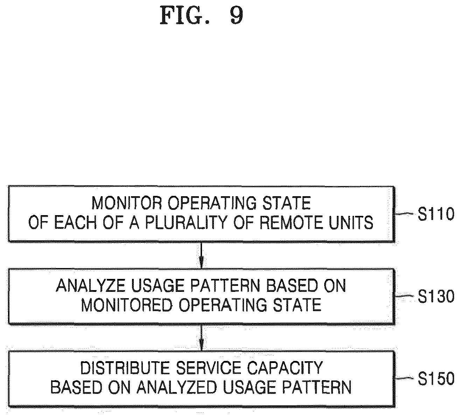

FIG. 9 is a flowchart of the method of operating the distributed antenna system 10 according to various embodiments covering the present invention.

Hereinafter, the node device 400 will be mainly described, but the node device 400 may be implemented as the capacity distribution sub-system 500 as described above.

Referring to FIG. 9, in operation S110, the node device 400 monitors an operating state of each of the plurality of remote units 300 in the distributed antenna system 10.

The monitoring module 410 of the node device 400 may monitor a state of each of all or some of the remote units 300 in the distributed antenna system 10.

Here, the operating state may include a state related to the operation of each of the remote units 300, as well as a state related to a service environment associated with each of the remote units 300.

For example, the monitoring module 410 may monitor at least one of throughput, the amount of uplink transmission, the amount of downlink transmission, and an operating power of each of the plurality of remote units 300 included in the distributed antenna system 10.

Here, the operating power may mean power consumption for a specific area of the remote unit 300 in the entire service area of the distributed antenna system 10.

Here, the amount of uplink transmission and the amount of downlink transmission may include a change amount of uplink transmission, a change amount of downlink transmission, and a ratio between the amount of uplink change and the amount of downlink change between an uplink and a downlink. Here, the amount of uplink change and the amount of downlink change may mean the amount of change associated with an uplink signal and a downlink signal, respectively, in each of the plurality of remote units 300. For example, the amount of uplink change and the amount of downlink change may include power variation of the uplink signal and the downlink signal, and may include variation of modulation types of the uplink signal and the downlink signal, respectively. Furthermore, the amount of uplink change and the amount of downlink change may be a change amount of uplink signal transmission and a change amount of downlink signal transmission in each of the plurality of remote units 300, respectively.

The monitoring module 140 may monitor a service channel state of each of the plurality of remote units 300. Therefore, the monitoring module 140 may monitor the above-described operating state for each service channel output from each of the remote units 300.

A plurality of monitoring modules 410 may monitor the plurality of remote units 300 in a certain area, respectively.

In operation S130, the node device 400 analyzes a usage pattern for the plurality of remote units 300 based on the monitored operating state.

The pattern analysis module 430 of the node device 400 may analyze the usage pattern for the plurality of remote units 300 based on the monitored operating state of each of the plurality of remote units.

The above-described usage pattern may mean a pattern for use of each of the plurality of remote units derived based on the monitored operating state. Thus, the pattern for use of each of the plurality of remote units may mean an operation pattern of each of the remote units.

For example, the pattern analysis module 430 may analyze a movement pattern of the user within the coverage of the plurality of remote units, based on the monitored operating state. Here, the movement pattern of the user may mean a movement pattern of a user having a terminal. In more detail, the pattern analysis module 430 may analyze a movement pattern for a movement direction and movement time of users within the coverage of a plurality of remote units.

In an embodiment covering the present invention, the pattern analysis module 430 analyzes a movement pattern for a movement direction and movement time of users, based on the change in an uplink signal power and a downlink signal power between adjacent remote units. Here, a change in the uplink signal power and the downlink signal power may be changes in the respective signal powers, or may include a change in the ratio between the uplink signal power and the downlink signal power. In another embodiment, the pattern analysis module 430 may analyze a movement pattern for a movement direction and movement time of users, based on the change in an operating power between adjacent remote units.

As another example, the pattern analysis module 430 may analyze a change pattern of the number of users within the coverage of the plurality of remote units based on the monitored operating state. Here, the change pattern of the number of users may mean a pattern of increase/decrease in the number of users. In an embodiment, the pattern analysis module 430 may analyze a change pattern of increase or decrease in the number of users within the coverage of each of the plurality of remote units, based on the operating state such as the change in an operating power of each of the plurality of remote units and the change in the uplink signal power.

As another example, the pattern analysis module 430 may analyze a usage pattern within the coverage of a plurality of remote units. The usage pattern may mean a pattern of usage for each of a downlink and an uplink within the coverage of each of the plurality of remote units. For example, the pattern analysis module 430 may analyze an increase/decrease pattern of usage in the coverage of each of the plurality of remote units.

The pattern analysis module 430 may perform the above-described pattern analysis based on geographical positions in the service area of the distributed antenna system 10, and may perform the above-described pattern analysis based on the coverage.

As such, the pattern analysis module 430 may analyze and derive a pattern of a user (terminal) to be serviced, a pattern of the service capacity, and the like based on the monitored operating state.

In operation S150, the node device 400 distributes the service capacity of each of the plurality of remote units based on the analyzed usage pattern.

The capacity distribution module 450 of the node device 400 may distribute the service capacity of each of the plurality of remote units 300 based on the analyzed usage pattern. Here, the service capacity distribution may mean increasing, decreasing, or maintaining the service capacity.

In an embodiment, the capacity distribution module 450 may increase, decrease, and maintain the service capacity of each of the plurality of remote units 300 according to the analyzed movement pattern.

In another embodiment, the capacity distribution module 450 may increase, decrease, and maintain the service capacity of each of the plurality of remote units 300 according to an analyzed change pattern of the movement amount.

In another embodiment, the capacity distribution module 450 may increase, decrease, and maintain the service capacity of each of the plurality of remote units 300 according to the analyzed change pattern of the number of users.

Also, the capacity distribution module 450 may increase, decrease, and maintain the service capacity for each of the plurality of remote units 300 for each service channel based on the analyzed usage pattern. Therefore, the capacity distribution module 450 may adjust the service capacity output from each of the plurality of remote units 300 for each service channel based on the analyzed usage pattern.

As described above, the distributed antenna system 10 according to various embodiments may monitor the operating state of each of the plurality of remote units 300 and analyze the usage pattern for the plurality of remote units 300 based on the monitored operating state. Since the distributed antenna system 10 may distribute the service capacity of each of the plurality of remote units 300 based on the analyzed usage pattern, the distributed antenna system 10 may distribute the service capacity according to the operating state of each of the plurality of remote units 300, for example, a service output state. Therefore, the disclosure may distribute the service capacity according to the analyzed usage pattern rather than distribute the service capacity of the remote unit 300 according to values measured in real time, so that may actively respond to a use state of the distributed antenna system. Thus, the disclosure may optimize the service capacity distribution and enable the distributed antenna system 10 to operate efficiently.

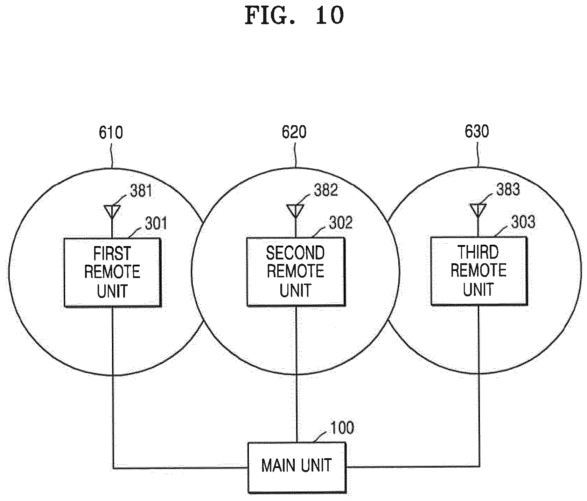

A specific embodiment will be described with reference to FIGS. 10 to 12.

FIG. 10 is an exemplary view of the arrangement of a remote unit according to an embodiment.

Referring to FIG. 10, the main unit 100 of the distributed antenna system 10 may operate in connection with a first remote unit 301, a second remote unit 302, and a third remote unit 303. The first remote unit 301, the second remote unit 302, and the third remote unit 303 may provide services to a first region 610, a second region 620, and a third region 630, respectively. Here, the first region 610, the second region 620, and the third region 630 may refer to a geographical area and may be adjacent to each other. The first region 610, the second region 620, and the third region 630 may be the same planar region, and some or all of the first region 610, the second region 620, and the third region 630 may be different planar regions.

The first remote unit 301, the second remote unit 302, and the third remote unit 303 may provide services to the first region 610, the second region 620, and the third region 630 according to service capacity distribution, respectively, or may provide services to other adjacent regions. Accordingly, each of the remote units 310, 320, and 330 may provide a service to only one region, or may provide services to a plurality of regions. Furthermore, each of the remote units 310, 320, and 330 may provide a service to a divided region obtained by dividing some of the first region 610, the second region 620, and the third region 630 described above, or may provide a service to a sector in which a plurality of regions are combined. Here, a divided region obtained by dividing one region may be referred to as a sector, or a region obtained by combining a plurality of regions may be referred to as a sector.

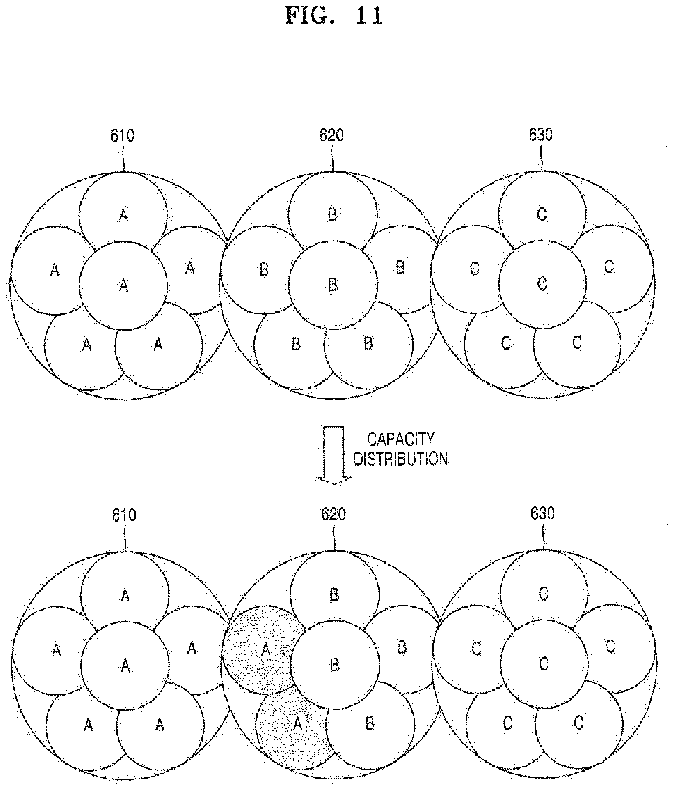

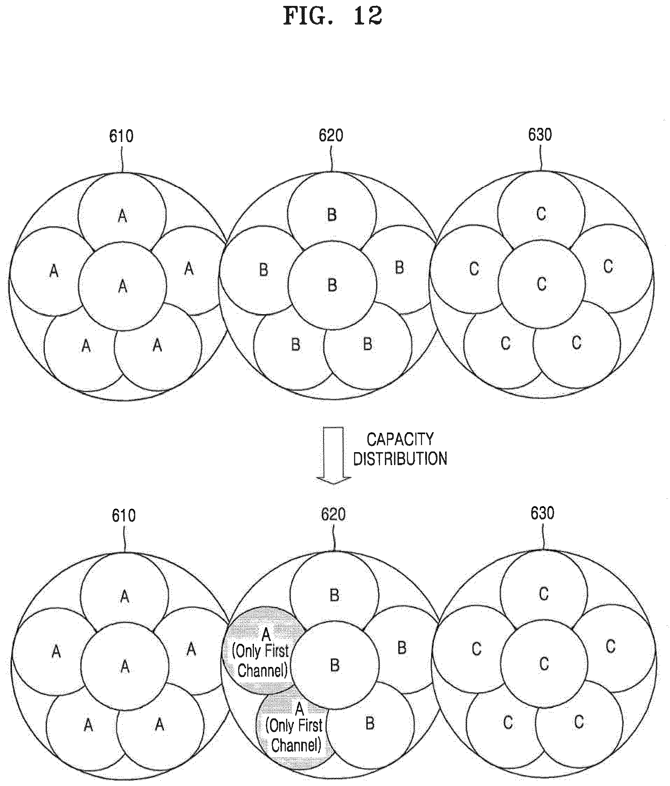

FIGS. 11 and 12 are conceptual diagrams of service capacity distribution according to various embodiments.

Referring to FIG. 11, the first remote unit 301 may provide a service to the first region 610, the second remote unit 302 may provide a service to the second region 620, and the third remote unit 303 may provide a service to the third region 630.

In FIG. 11, coverages serviced by the first remote unit 301 may be denoted by A, coverages serviced by the second remote unit 302 may be denoted by B, and coverages serviced by the third remote unit 303 may be denoted by C.

The monitoring module 410 of the node device 400 may monitor an operating state of each of the first remote unit 301, the second remote unit 302, and the third remote unit 303. For example, the monitoring module 410 may monitor at least one of throughput, the amount of uplink change, the amount of downlink change, the amount of downlink transmission, and an operating power of each of the first remote unit 301, the second remote unit 302, and the third remote unit 303.

The pattern analysis module 430 of the node device 400 may analyze a usage pattern for each of the first remote unit 301, the second remote unit 302, and the third remote unit 303 based on the monitored operating state. For example, the pattern analysis module 430 may analyze a movement pattern of users, a change pattern of the number of users, and a usage change pattern for each of the first region 610, the second region 620, and the second region 620 serviced by the first remote unit 301, the second remote unit 302, and the third remote unit, respectively, based on the monitored operating state.

In an embodiment, when the operating power of the second remote unit 302 increases and the operating power of the first remote unit 301 decreases in the monitored operating state, the pattern analysis module 430 may analyze a movement pattern in which users in the first region 610 move to the second region 620.

In another embodiment, when an uplink signal power of the second remote unit 302 increases and when a downlink signal power of the first remote unit 301 is maintained but an uplink signal power of the first remote unit 301 decreases in the monitored operating state, the pattern analysis module 430 may analyze that users move from the first region 610 to the second region 620. The pattern analysis module 430 may analyze a user movement pattern according to the user movement based on unbalance, change, etc. between the uplink signal power and the downlink signal power.

In another embodiment, when the operating power of the second remote unit 302 increases in the monitored operating state, the pattern analysis module 430 may analyze that users or a usage amount increase in the second region 620 serviced by the second remote unit 302.

The capacity distribution module 450 of the node device 400 may distribute the service capacity of at least one of the first remote unit 301, the second remote unit 302, and the third remote unit 303 based on the analyzed usage pattern.

For example, according to the analyzed usage pattern, when it is analyzed that the number of users in the first region 610 serviced by the first remote unit 301 decreases and the number of users in the second region 620 serviced by the second remote unit 302 increases, the capacity distribution module 450 may distribute a portion of the service capacity of the first remote unit 301 to the second region 620. Accordingly, the first remote unit 301 may provide a service not only to the first region 610 but also to a portion of the second region 620. Thus, as shown in FIG. 11, the second region 620 may include only coverages B serviced by the second remote unit 302 and may further include coverages A serviced by the first remote unit 301 according to the service capacity distribution.

The node device 400 according to various embodiments may distribute the service capacity to a specific service channel based on the analyzed usage pattern. Hereinafter, service capacity distribution to a specific service channel of the node device 400 will be described with reference to FIG. 12.

Referring to FIG. 12, the monitoring module 410 may monitor the operating state of each of the first remote unit 301, the second remote unit 302, and the third remote unit 303 that provide services to the first region 610, the second region 620, and the third region 630, respectively. The pattern analysis module 430 may analyze that the usage of a first service channel in the second region 620 increases, based on the monitored operating state. The capacity distribution module 450 may distribute a portion of the service capacity of the first remote unit 301 only to the first service channel in the second region 620. Accordingly, the first remote unit 301 may additionally provide a service to the first service channel for a portion of the second region 620 as well as the first region 610. As shown in FIG. 11, the second region 620 may include only the coverages B serviced by the second remote unit 302 and may further include the coverages A serviced by the first remote unit 301 which provides a service only to the first service channel, according to the service capacity distribution. Thus, the second region 620 may distribute more service capacity than before to the first service channel.

As described above, the node device 400 may perform sectorization for distributing the service capacity only to a specific service channel according to the analyzed usage pattern. Thus, the node device 400 may increase or decrease the service capacity of a specific service channel, for a required area, according to the analyzed usage pattern.

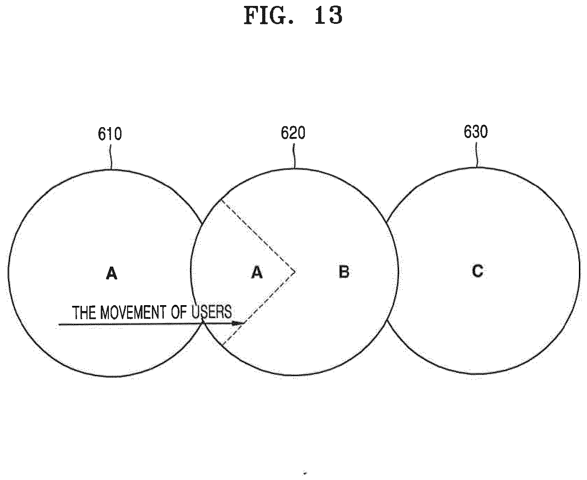

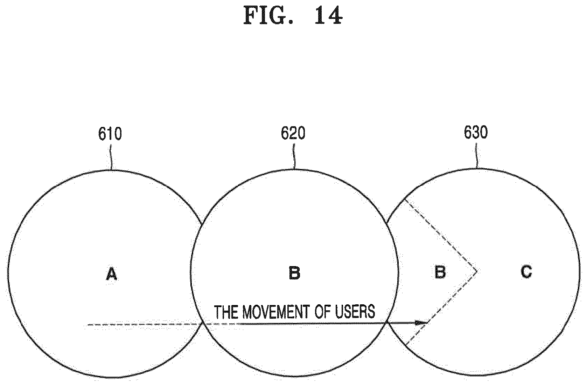

As described above, the node device 400 according to various embodiments may not only distribute the service capacity of each of the plurality of remote units according to the analyzed usage pattern but also distribute the service capacity dynamically or continuously based on the analyzed usage pattern. It will be described with reference to FIGS. 13 and 14.

FIGS. 13 and 14 are conceptual diagrams of service distribution according to a user movement pattern according to various embodiments.

In FIGS. 13 and 14, A, B, and C shown in the respective regions denote service capacity share according to service capacity distribution of each of the first remote unit 301, the second remote unit 302, and the third remote unit 303. Therefore, A denotes service capacity share of the first remote unit 301 in the corresponding area, B denotes service capacity share of the second remote unit 302 in the corresponding area, and C denotes service capacity share of the remote unit 303 in the corresponding area.

Referring to FIG. 13, the pattern analysis module 430 of the node device 400 may analyze a movement pattern of users in a plurality of areas based on a monitored operating state. For example, when the uplink signal power of the second remote unit 302 corresponding to the second region 620 increases and when the downlink signal power of the first remote unit 301 corresponding to the first region 610 is maintained but the uplink signal power of the first remote unit 301 decreases, the pattern analysis module 430 may analyze that users move from the first region 610 to the second region 620. The capacity distribution module 450 may distribute the service capacity of each of the first remote unit 301 and the second remote unit 302 based on the analyzed movement pattern. For example, the capacity distribution module 450 may distribute the service capacity such that the first remote unit 301 provides a service to the second region 620 with some of the entire service capacity in order to increase the service capacity of the second region 620 in which users are moving. Accordingly, not only the second remote unit 302 but also the first remote unit 301 may provide an additional service to the second region 620. Therefore, the capacity distribution module 450 may dynamically respond to an increase in usage due to the movement of users. Meanwhile, depending on an embodiment, the capacity distribution module 450 may distribute the service capacity such that not only the first remote unit 301 but also the third remote unit 303 may provide a service to a portion of the entire service capacity of the second region 620.

Referring FIG. 14 in addition to FIG. 13, when an uplink signal power of the third remote unit 303 corresponding to the third region 630 increases and when a downlink signal power of the second remote unit 302 corresponding to the second region 620 is maintained but the uplink signal power of the second remote unit 302 decreases, the pattern analysis module 430 may analyze that users move from the second region 620 to the third region 630. The capacity distribution module 450 may distribute the service capacity of each of the second remote unit 302 and the third remote unit 303 based on the analyzed movement pattern. For example, the capacity distribution module 450 may distribute the service capacity such that the second remote unit 302 provides a service to some of the entire service capacity of the third region 630 in order to increase the service capacity of the third region 630 in which users are moving. Accordingly, not only the third remote unit 303 but also the second remote unit 302 may provide an additional service to the third region 630. Therefore, the capacity distribution module 450 may dynamically respond to an increase in usage due to the movement of users. Meanwhile, depending on an embodiment, the capacity distribution module 450 may distribute the service capacity such that not only the second remote unit 302 but also the first remote unit 301 may provide a service to a portion of the entire service capacity of the third region 630.

The service capacity distribution according to the movement of users according to the above-described FIGS. 13 and 14 may be performed dynamically or continuously. Accordingly, when the users move from the first region 610 to the third region 630 through the second region 620, the node device 400 may analyze the movement pattern of the users and may distribute the service capacity of the remote units providing a service to each area according to the analyzed movement pattern. In addition, the node device 400 may adjust the service capacity of the remote units for each service channel when distributing the service capacity. A detailed description thereof will not be given herein.

The node device 400 according to various embodiments, based on a monitored operating state of a plurality of remote units, may predict the service capacity of each of the plurality of remote units by not only analyzing a usage pattern for the plurality of remote units but also using information about the analyzed usage pattern or the monitored operating state. For example, the node device 400 may predict the service capacity of each of the plurality of remote units for each time period. Hereinafter, it will be described in detail.

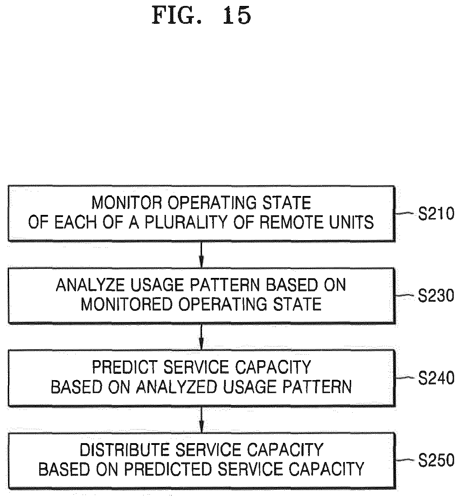

FIG. 15 is a flowchart of the method of operating the distributed antenna system 10 according to various embodiments.

Hereinafter, the node device 400 will be mainly described, but the node device 400 may be implemented as the capacity distribution sub-system 500 as described above.

Referring to FIG. 15, in operation S210, the node device 400 may monitor an operating state of each of the plurality of remote units 300 in the distributed antenna system 10.

The monitoring module 410 of the node device 400 may monitor a state of each of all or some of the remote units 300 in the distributed antenna system 10. Here, the operating state may include a state related to a service environment associated with each of the remote units 300, as well as a state related to the operation of each of the remote units 300. Since the monitoring of the operating state of the node device 400 has been described above, a detailed description thereof will not be given herein.

In operation S230, the node device 400 may analyze a usage pattern for the plurality of remote units 300 based on the monitored operating state.

The pattern analysis module 430 of the node device 400 may analyze the usage pattern for the plurality of remote units 300 based on the monitored operating state of each of the plurality of remote units. The above-described usage pattern may mean a pattern for use of each of the plurality of remote units derived based on the monitored operating state. Thus, the pattern for use of each of the plurality of remote units may mean an operation pattern of each of the remote units. Since the analyzing of the usage pattern of the node device 400 has been described above, a detailed description thereof will not be given herein.

In operation S240, the node device 400 may predict the service capacity of each of the plurality of remote units based on the analyzed usage pattern.

The pattern analysis module 430 of the node device 400 may predict the service capacity of each of the plurality of remote units 300 based on the analyzed usage pattern. In addition, the pattern analysis module 430 may predict the service capacity of each of the plurality of remote units 300 based on the monitored operating state.

For example, the pattern analysis module 430 may predict the service capacity of each of the plurality of remote units 300 for each time period based on the analyzed usage pattern.

As another example, the pattern analysis module 430 may predict the service capacity of each of the plurality of remote units 300 by time and service channel based on the analyzed usage pattern.

In another embodiment, the pattern analysis module 430 may predict the service capacity of each of the plurality of remote units 300 for each time period based on a collected monitored operating state of each of the plurality of remote units and an analyzed usage pattern.

Here, the service capacity for each time period may be the service capacity for each period of time, and the pattern analysis module 430 may predict the service capacity of each of the plurality of remote units according to specific time information such as date, day, time, and the like.

In a specific embodiment, the pattern analysis module 430 may predict that the service capacity of the first region 610 increases during working hours when an operating power of the first remote unit 301 corresponding to the first region 610 increases more than a certain number of times every working hour or during working hours.

The pattern analysis module 430 may predict that the service capacity of the third region 630 increases during lunch time when an operating power of the third remote unit 303 corresponding to the third region 630 increases more than a certain number of times every lunch time or during lunch time.

The node device 400 according to various embodiments may obtain the above-described time information and event information related to a time-based event, and may analyze the service capacity by using the obtained time information and event information together with the monitored operating state of the plurality of remote units 300 and the analyzed usage pattern. Accordingly, the pattern analysis module 430 may predict the service capacity of the plurality of remote units by combining transition according to the monitored operating state and the analyzed usage pattern with the obtained time information and event information.

In a specific embodiment, the pattern analysis module 430 may obtain sport event information related to an area serviced by the distributed antenna system 10 and may predict the service capacity of a plurality of remote units based on the obtained sport event information and the analyzed usage pattern. For example, the pattern analysis module 430, based on the obtained sport event information and the analyzed usage pattern, may predict that the service capacity of the plurality of remote units corresponding to the vicinity of a sport event place will increase in a first time zone for a period of time before the start of a sport event, and may predict that the service capacity of the plurality of remote units corresponding to the sport event place will increase in a second time zone from the start of the sport event until the end of the sport event. The pattern analysis module 430 may predict that the service capacity of the plurality of remote units corresponding to the vicinity of the sport event place will increase in a third time zone from the end of the sport event until a period of time.

As such, the node device 400 may obtain time information and time-based event information related to the distributed antenna system 10, and may predict the service capacity of the plurality of remote units for each time period using the obtained information. In addition, the node device 400 may derive event information predicted for each time period based on the analyzed usage pattern, without obtaining the above-described time information and time-based event information. Accordingly, the node device 400 may predict the service capacity of the plurality of remote units for each time period by using the predicted event information based on the analyzed usage pattern. For example, the pattern analysis module 430, when the analyzed usage pattern is repeated in relation to a specific time or a specific schedule, may derive the event information predicted for each time period based on the repeated usage pattern, and may predict the service capacity of the plurality of remote units for each time period by using the derived event information.

In operation S250, the node device 400 may distribute the service capacity of each of the plurality of remote units based on the predicted service capacity.

The capacity distribution module 450 of the node device 400 may distribute the service capacity of each of the plurality of remote units 300 based on a predicted usage pattern. Here, the service capacity distribution may mean increasing, decreasing, or maintaining the service capacity.

In an embodiment, the capacity distribution module 450 may increase, decrease, and maintain the service capacity of each of the plurality of remote units 300 according to the predicted service capacity for each time period.

In another embodiment, the capacity distribution module 450 may increase, decrease, and maintain the service capacity of each of the plurality of remote units 300 according to the predicted service capacity for each time period and for each service channel.

Also, the capacity distribution module 450 may increase, decrease, and maintain the service capacity of each of the plurality of remote units 300 for each service channel based on the predicted service capacity. Therefore, the capacity distribution module 450 may adjust the service capacity output from each of the plurality of remote units 300 for each service channel, based on the predicted service capacity.

As described above, the distributed antenna system 10 according to the various embodiments may predict the service capacity of each of the plurality of remote units 300. Since the distributed antenna system 10 may distribute the service capacity of each of the plurality of remote units 300 based on the predicted service capacity, the distributed antenna system 10 may distribute the service capacity in advance before the service capacity of each of the plurality of remote units 300 increases or decreases.

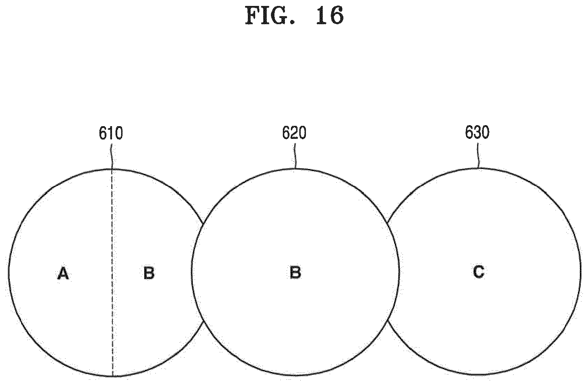

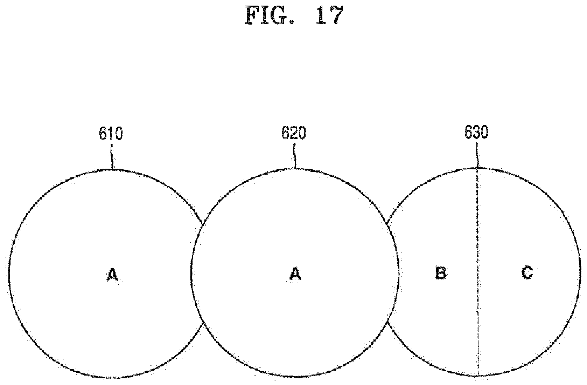

The service capacity distribution according to the above-described predicted service capacity will be described with reference to FIGS. 16 and 17.

FIGS. 16 and 17 are conceptual diagrams of service capacity distribution according to a predicted service capacity according to various embodiments.

In FIGS. 16 and 17, A, B, and C shown in the respective regions denote service capacity share according to service capacity distribution of the first remote unit 301, the second remote unit 302, and the third remote unit 303, respectively. Therefore, A denotes service capacity share of the first remote unit 301 in the corresponding area, B denotes service capacity share of the second remote unit 302 in the corresponding area, and C denotes service capacity share of the remote unit 303 in the corresponding area.

Referring to FIG. 16, the pattern analysis module 430 of the node device 400 may predict the service capacity of each of the first region 610, the second region 620, and the third region 630. For example, the pattern analysis module 430 may predict that the service capacity of the first region 610 will increase. The capacity distribution module 450 may distribute the service capacity of each of the first remote unit 301, the second remote unit 302, and the third remote unit 303 based on the service capacity predicted by the pattern analysis module 430.

For example, the capacity distribution module 450 may distribute the service capacity of a remote unit other than the first remote unit 301 providing a service to the first region 610 where the service capacity is to be increased to the first region 610. In a specific embodiment, the capacity distribution module 450 may distribute the service capacity so that the second remote unit 302 having a margin for the service capacity among the second remote unit 302 and the third remote unit 303 may also provide a service to the first region 610. Accordingly, the first remote unit 301 and the second remote unit 302 may provide a service to the first region 610. Therefore, the node device 400 may correspond to a change in service demand of the first region 610 where the service capacity is expected to increase.

Referring to FIG. 17, the pattern analysis module 430 of the node device 400 may predict the service capacity of each of the first region 610, the second region 620, and the third region 630. For example, the pattern analysis module 430 may predict that the service capacity of the third region 630 will increase. The capacity distribution module 450 may distribute the service capacity of each of the first remote unit 301, the second remote unit 302, and the third remote unit 303 based on the service capacity predicted by the pattern analysis module 430. For example, the capacity distribution module 450 may distribute the service capacity of a remote unit other than the third remote unit 303 providing a service to the third region 630 where the service capacity is to be increased to the third region 630. The capacity distribution module 450 may determine a remote unit to provide the service capacity to be added to the third region 630 according to the service capacity to be increased in the third region 630. For example, the capacity distribution module 450 may determine the remote unit to provide the service capacity to be added to the third region 630 and the service capacity to be further distributed, depending on the service capacity to be added to the third region 630 and the importance of service delivery stability in the third region 630. Here, the service delivery stability may mean a degree to which services provided to an area may be stably operated, and may be a relative value or an absolute value according to comparison with the reference value.

In an embodiment, when it is determined that it is insufficient to additionally distribute a portion of the capacity of one remote unit to the third area 630 and that the service delivery stability of the third region 630 is important, the capacity distribution module 450 may further distribute the total capacity of the second remote unit 302 adjacent to the third region 630 to the third region 630. The capacity distribution module 450 may distribute the service capacity of the first remote unit 301 so that the first remote unit 301 may provide a service to the first region 610 and the second region 620. Accordingly, the first region 610 and the second region 620 are serviced by the first remote unit 301 and the third region 630 is serviced by the second remote unit 302 and the third remote unit 303. Therefore, the node device 400 may correspond to a change in the service demand of the first region 610 where the service capacity is expected to increase, in advance.

The node device 400 according to various embodiments may set a plurality of areas as one sector and may distribute the service capacity of a plurality of remote units to the set sector. For example, the node device 400 may set a plurality of areas as one sector and monitor an operating state of each of a plurality of remote units with respect to the set sector. The node device 400 may analyze a usage pattern for a plurality of service units based on the monitored operating state and may distribute the service capacity of each of a plurality of remote units to the set sector based on the analyzed usage pattern. In addition, the node device 400 may predict the service capacity of the set sector. Therefore, the node device 400 may set the plurality of areas as one sector and may distribute the service capacity to the set sector. Also, the node device 400 may distribute the service capacity of each of the plurality of remote units according to at least one of the analyzed usage pattern and the predicted service capacity to each of a plurality of sectors in which each of the plurality of areas is set as a sector.

In addition, the node device 400 may divide one area into a plurality of sub areas, may perform at least one of usage pattern analysis and service capacity prediction for each of the plurality of divided sub areas, and may distribute the service capacity of each of the plurality of remote units to each of the plurality of sub areas based on at least one of the analyzed usage pattern and the predicted service capacity.

The operating state monitoring, the usage pattern analysis, the service capacity prediction, and the service capacity distribution of the node device 400 according to various embodiments for the sector and the sub areas are the same as those with reference the above-described areas, and thus a detailed description thereof will not be given herein.

The service capacity distribution of each of the plurality of remote units according to at least one of the usage pattern analysis and the service capacity prediction for the set sector and the sub areas of the node device 400 according to the various embodiments is the same as those with reference the above-described areas, and thus a detailed description thereof will not be given herein.

The node device 400 described above may be a sub-system of the distributed antenna system 10 and may be the capacity distribution sub-system 500 as described above.

In the above description, the main unit 100 is described as one unit. However, the number of the main units 100 may vary depending on the configuration and the topology of the distributed antenna system 10. This will be described later below.

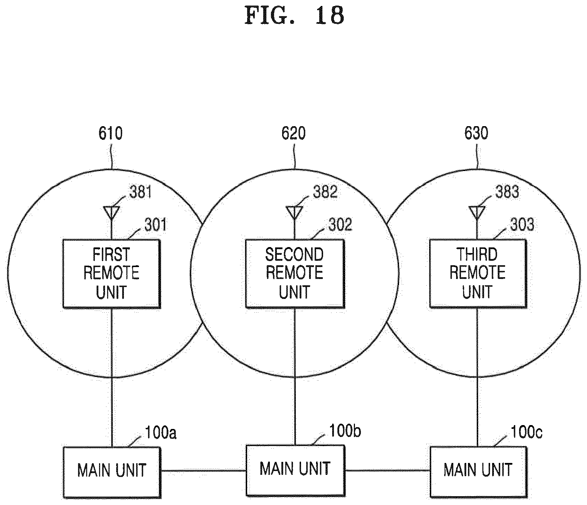

FIG. 18 is an exemplary view of a configuration including a plurality of main units according to various embodiments.

Referring to FIG. 10, a first main unit 100a, a second main unit 100b, and a third main unit 100c of the distributed antenna system 10 may operate in connection with the first remote unit 301, the second remote unit 302, and the third remote unit 303, respectively. The first remote unit 301, the second remote unit 302, and the third remote unit 303 may provide services to a first region 610, a second region 620, and a third region 630, respectively. Here, the first region 610, the second region 620, and the third region 630 may refer to geographical areas and may be adjacent to each other. The first region 610, the second region 620, and the third region 630 may be the same planar region, and some or all of the first region 610, the second region 620, and the third region 630 may be different planar regions.

Each of the first main unit 100a, the second main unit 100b, and the third main unit 100c may communicate with a remote unit not directly connected thereto through another connected main unit, and may provide services through a remote unit not directly connected thereto. Furthermore, each of the first main unit 100a, the second main unit 100b, and the third main unit 100c may distribute the service capacity of the remote unit not directly connected thereto through another connected main unit.

For example, the first main unit 100a may provide a service through the second remote unit 302 and distribute the service capacity of the second remote unit 302 by communicating with not only the first remote unit 301 but also the second remote unit 302 through the connected second main unit 100b. Furthermore, the first main unit 100a may provide a service through the third remote unit 303 and distribute the service capacity of the third remote unit 303 by communicating with the third remote unit 303 through the connected second main unit 100b and the third main unit 100c.

As such, each of the plurality of main units 100 may communicate with a remote unit not directly connected thereto through another main unit as well as a directly connected remote unit, and may provide a service and may perform service capacity distribution through the remote unit not directly connected thereto.

Accordingly, the method of operating the distributed antenna system and the operation of the capacity distribution sub-system and the node devices according to various embodiments described above may be implemented not only in a configuration including one main unit 100 but also in a configuration including a plurality of main units 100a to 100c.

Hereinabove, the disclosure has been described with reference to the preferred embodiments. However, it will be appreciated by those skilled in the art that various modifications and changes of the disclosure can be made without departing from the scope of the inventive concept which are defined in the appended claims.

## Claims

1. A service capacity distribution method of a distributed antenna system, the service capacity distribution method comprising:
monitoring an operating state of each of a plurality of remote units;
analyzing a usage pattern for the plurality of remote units based on the monitored operating state; and
distributing the service capacity of each of the plurality of remote units based on the analyzed usage pattern,
**characterized in that** the analyzing of the usage pattern comprises:
analyzing a movement pattern for a movement direction and movement time of users based on a change in an uplink signal power and a downlink signal power between adjacent remote units.

2. The service capacity distribution method of claim 1, wherein the monitoring of the operating state comprises:
monitoring at least one of throughput, the amount of uplink transmission, the amount of downlink transmission, and an operating power of each of the plurality of remote units.

3. The service capacity distribution method of claim 1, wherein the distributing of the service capacity comprises:
distributing the service capacity of each of the plurality of remote units corresponding to a direction in accordance with the movement pattern based on the analyzed movement pattern.

4. The service capacity distribution method of claim 1, wherein the analyzing of the usage pattern comprises:
analyzing a usage change pattern within coverage of each of the plurality of remote units, based on the operating state within the coverage of each of the plurality of remote units.

5. The service capacity distribution method of claim 4, wherein the distributing of the service capacity comprises:
distributing the service capacity of each of the plurality of remote units corresponding to the usage change pattern based on the analyzed usage change pattern.

6. The service capacity distribution method of claim 1, further comprising:
predicting the service capacity of each of the plurality of remote units based on the analyzed usage pattern,
wherein the distributing of the service capacity comprises:
distributing the service capacity of each of the plurality of remote units based on the predicted service capacity.

7. The service capacity distribution method of claim 6, wherein the predicting of the service capacity comprises:
predicting the service capacity of each of the plurality of remote units for each time period, and
the distributing of the service capacity of each of the plurality of remote units based on the predicted service capacity comprises:
distributing the service capacity of each of the plurality of remote units based on the predicted service capacity for each time period.

8. The service capacity distribution method of claim 1, wherein the distributing of the service capacity comprises:
distributing the service capacity of each of the plurality of remote units for each service channel, based on the analyzed usage pattern for each service channel.

9. A sub-system (500) for distributing a service capacity of a distributed antenna system, the sub-system (500) comprising:
a monitoring module (410) configured to monitor an operating state of each of a plurality of remote units;
a pattern analysis module (430) configured to analyze a usage pattern for the plurality of remote units based on the monitored operating state; and
a capacity distribution module (450) configured to distribute the service capacity of each of the plurality of remote units based on the analyzed usage pattern, **characterized in that** the analyzing of the usage pattern comprises analyzing a movement pattern for a movement direction and movement time of users based on a change in an uplink signal power and a downlink signal power between adjacent remote units.

10. The sub-system (500) of claim 9, wherein the monitoring module (410) is configured to monitor at least one of throughput, the amount of uplink transmission, the amount of downlink transmission, and an operating power of each of the plurality of remote units.

11. The sub-system (500) of claim 9, wherein the capacity distribution module (450) is configured to distribute the service capacity of each of the plurality of remote units corresponding to a direction in accordance with the movement pattern based on the analyzed movement pattern.

12. The sub-system (500) of claim 9, wherein the pattern analysis module (430) is configured to analyze a usage change pattern within coverage of each of the plurality of remote units, based on the operating state within the coverage of each of the plurality of remote units.

13. The sub-system (500) of claim 12, wherein the capacity distribution module (450) is configured to distribute the service capacity of each of the plurality of remote units corresponding to the usage change pattern based on the analyzed usage change pattern.

14. The sub-system (500) of claim 9, wherein the pattern analysis module (430) is configured to predict the service capacity of each of the plurality of remote units based on the analyzed usage pattern, and
the capacity distribution module (450) is configured to distribute the service capacity of each of the plurality of remote units based on the predicted service capacity.

15. The sub-system (500) of claim 14, wherein the pattern analysis module (430) is configured to predict the service capacity of each of the plurality of remote units for each time period, and
the capacity distribution module (450) is configured to distribute the service capacity of each of the plurality of remote units based on the predicted service capacity for each time period.

16. The sub-system (500) of claim 9, wherein the capacity distribution module (450) is configured to distribute the service capacity of each of the plurality of remote units for each service channel, based on the analyzed usage pattern for each service channel.

## Patentansprüche

1. Ein Dienstkapazitäts-Verteilungsverfahren eines verteilten Antennensystems, wobei das Dienstkapazitäts-Verteilungsverfahren umfasst:
Überwachen eines Betriebszustands von jeder einer Vielzahl von entfernten Einheiten;
Analysieren eines Nutzungsmusters für die Vielzahl von entfernten Einheiten auf der Grundlage des überwachten Betriebszustands; und
Verteilen der Dienstkapazität von jeder der Vielzahl von entfernten Einheiten auf der Grundlage des analysierten Nutzungsmusters,
**dadurch gekennzeichnet, dass**
das Analysieren des Nutzungsmusters umfasst:
Analysieren eines Bewegungsmusters für eine Bewegungsrichtung und Bewegungszeit von Nutzern auf der Grundlage einer Änderung einer Uplink-Signalleistung und einer Downlink-Signalleistung zwischen benachbarten entfernten Einheiten.

2. Dienstkapazitäts-Verteilungsverfahren nach Anspruch 1, wobei das Überwachen des Betriebszustands umfasst:
Überwachen mindestens eines von Durchsatz, Umfang von Uplink-Übertragung, Umfang von Downlink-Übertragung und Betriebsleistung jeder der Vielzahl von entfernten Einheiten.

3. Dienstkapazitäts-Verteilungsverfahren nach Anspruch 1, wobei die Verteilung der Dienstkapazität umfasst:
Verteilen der Dienstkapazität jeder der Vielzahl von entfernten Einheiten entsprechend einer Richtung in Übereinstimmung mit dem Bewegungsmuster auf der Grundlage des analysierten Bewegungsmusters.

4. Dienstkapazitäts-Verteilungsverfahren nach Anspruch 1, wobei das Analysieren des Nutzungsmusters umfasst:
Analysieren eines Nutzungsänderungsmusters innerhalb der Abdeckung jeder der Vielzahl von entfernten Einheiten, basierend auf dem Betriebszustand innerhalb der Abdeckung jeder der Vielzahl von entfernten Einheiten.

5. Dienstkapazitäts-Verteilungsverfahren nach Anspruch 4, wobei die Verteilung der Dienstkapazität umfasst:
Verteilen der Dienstkapazität von jeder der Vielzahl von entfernten Einheiten entsprechend dem Nutzungsänderungsmuster auf der Grundlage des analysierten Nutzungsänderungsmusters.

6. Dienstkapazitäts-Verteilungsverfahren nach Anspruch 1, ferner umfassend:
Vorhersagen der Dienstkapazität von jeder der Vielzahl von entfernten Einheiten auf der Grundlage des analysierten Nutzungsmusters,
wobei das Verteilen der Dienstkapazität umfasst:
Verteilen der Dienstkapazität von jeder der Vielzahl von entfernten Einheiten auf der Grundlage der vorhergesagten Dienstkapazität.

7. Dienstkapazitäts-Verteilungsverfahren nach Anspruch 6, wobei das Vorhersagen der Dienstkapazität umfasst:
Vorhersagen der Dienstkapazität von jeder der Vielzahl von entfernten Einheiten für jede Zeitperiode und
das Verteilen der Dienstkapazität von jeder der Vielzahl von entfernten Einheiten auf der Grundlage der vorhergesagten Dienstkapazität umfasst:
Verteilen der Dienstkapazität von jeder der Vielzahl von entfernten Einheiten auf der Grundlage der vorhergesagten Dienstkapazität für jede Zeitperiode.

8. Dienstkapazitäts-Verteilungsverfahren nach Anspruch 1, wobei das Verteilen der Dienstkapazität umfasst:
Verteilen der Dienstkapazität von jeder der Vielzahl von entfernten Einheiten für jeden Dienstkanal, basierend auf dem analysierten Nutzungsmuster für jeden Dienstkanal.

9. Teilsystem (500) zum Verteilen einer Dienstkapazität eines verteilten Antennensystems, wobei das Teilsystem (500) umfasst:
ein Überwachungsmodul (410), das konfiguriert ist, einen Betriebszustand von jeder einer Vielzahl von entfernten Einheiten zu überwachen;
ein Musteranalysemodul (430), das konfiguriert ist, ein Nutzungsmuster für jede einer Vielzahl von entfernten Einheiten auf der Grundlage des überwachten Betriebszustands zu analysieren; und
ein Kapazitätsverteilungsmodul (450), das konfiguriert ist, die Dienstkapazität von jeder der Vielzahl von entfernten Einheiten basierend auf dem analysierten Nutzungsmuster zu verteilen,
**dadurch gekennzeichnet, dass** das Analysieren des Nutzungsmusters umfasst ein Analysieren eines Bewegungsmusters für eine Bewegungsrichtung und Bewegungszeit von Nutzern umfasst, basierend auf einer Änderung in einer Uplink-Signalleistung und einer Downlink-Signalleistung zwischen benachbarten entfernten Einheiten.

10. Teilsystem (500) nach Anspruch 9, wobei das Überwachungsmodul (410) konfiguriert ist, zumindest eines von Durchsatz, den Umfang der Uplink-Übertragung, den Umfang der Downlink-Übertragung und/oder eine Betriebsleistung von jeder der Vielzahl von entfernten Einheiten zu überwachen.

11. Teilsystem (500) nach Anspruch 9, wobei das Kapazitätsverteilungsmodul (450) konfiguriert ist, die Dienstkapazität von jeder der Vielzahl von entfernten Einheiten entsprechend einer Richtung in Übereinstimmung mit dem Bewegungsmuster auf der Grundlage des analysierten Bewegungsmusters zu verteilen.

12. Teilsystem (500) nach Anspruch 9, wobei das Musteranalysemodul (430) konfiguriert ist, ein Nutzungsänderungsmuster innerhalb der Abdeckung von jeder der Vielzahl von entfernten Einheiten auf der Grundlage des Betriebszustands innerhalb der Abdeckung von jeder der Vielzahl von entfernten Einheiten zu analysieren.

13. Teilsystem (500) nach Anspruch 12, wobei das Kapazitätsverteilungsmodul (450) konfiguriert ist, die Dienstkapazität von jeder der Vielzahl von entfernten Einheiten entsprechend dem Nutzungsänderungsmuster auf der Grundlage des analysierten Nutzungsänderungsmusters zu verteilen.

14. Teilsystem (500) nach Anspruch 9, wobei das Musteranalysemodul (430) konfiguriert ist, die Dienstkapazität von jeder der Vielzahl von entfernten Einheiten auf der Grundlage des analysierten Nutzungsmusters vorherzusagen, und
das Kapazitätsverteilungsmodul (450) konfiguriert ist, die Dienstkapazität jeder der Vielzahl von entfernten Einheiten auf der Grundlage der vorhergesagten Dienstkapazität zu verteilen.

15. Teilsystem (500) nach Anspruch 14, wobei das Musteranalysemodul (430) konfiguriert ist, die Dienstkapazität von jeder der Vielzahl von entfernten Einheiten für jede Zeitperiode vorherzusagen, und
das Kapazitätsverteilungsmodul (450) konfiguriert ist, die Dienstkapazität von jeder der Vielzahl von entfernten Einheiten auf der Grundlage der vorhergesagten Dienstkapazität für jede Zeitperiode zu verteilen.

16. Teilsystem (500) nach Anspruch 9, wobei das Kapazitätsverteilungsmodul (450) konfiguriert ist, die Dienstkapazität von jeder der Vielzahl von entfernten Einheiten für jeden Dienstkanal auf der Grundlage des analysierten Nutzungsmusters für jeden Dienstkanal zu verteilen.

## Revendications

1. Procédé de distribution de capacité de service d'un système d'antennes distribuées, le procédé de distribution de capacité de service consistant à :
surveiller un état de fonctionnement de chaque unité distante d'une pluralité d'unités distantes ;
analyser un schéma d'utilisation pour la pluralité des unités distantes en fonction de l'état de fonctionnement surveillé ; et
distribuer la capacité de service de chaque unité distante de la pluralité des unités distantes en fonction du schéma d'utilisation analysé,
**caractérisé en ce que** l'analyse du schéma d'utilisation consiste à :
analyser un schéma de mouvement pour une direction de mouvement et une durée de mouvement des utilisateurs en fonction d'un changement dans une puissance de signal en liaison montante et d'une puissance de signal en liaison descendante entre des unités distantes adjacentes.

2. Procédé de distribution de capacité de service selon la revendication 1, dans lequel la surveillance de l'état de fonctionnement consiste à :
surveiller au moins l'un parmi le débit, la quantité de transmission en liaison montante, la quantité de transmission en liaison descendante et une puissance de fonctionnement de chaque unité de la pluralité des unités distantes.

3. Procédé de distribution de capacité de service selon la revendication 1, dans lequel la distribution de la capacité de service consiste à :
distribuer la capacité de service de chaque unité distante de la pluralité des unités distantes correspondant à une direction conformément au schéma de mouvement basé sur le schéma de mouvement analysé.

4. Procédé de distribution de capacité de service selon la revendication 1, dans lequel l'analyse du schéma d'utilisation consistant à :
analyser un schéma de changement d'utilisation à. l'intérieur de la couverture de chaque unité distante de la pluralité des unités distantes, en fonction de l'état de fonctionnement à l'intérieur de la couverture de chaque unité distante de la pluralité des unités distantes.

5. Procédé de distribution de capacité de service selon la revendication 4, dans lequel la distribution de la capacité de service consiste à :
distribuer la capacité de service de chaque unité distante de la pluralité des unités distantes correspondant au schéma de changement d'utilisation en fonction du schéma de changement d'utilisation analysé.

6. Procédé de distribution de capacité de service selon la revendication 1, consistant en outre à :
prédire la capacité de service de chaque unité distante de la pluralité des unités distantes en fonction du schéma d'utilisation analysé,
la distribution de la capacité de service consistant à :
distribuer la capacité de service de chaque unité distante de la pluralité des unités distantes en fonction de la capacité de service prédite.

7. Procédé de distribution de capacité de service selon la revendication 6, dans lequel la prédiction de la capacité de service consiste à :
prédire la capacité de service de chaque unité distante de la pluralité des unités distantes pour chaque période de temps, et
la distribution de la capacité de service de chaque unité distante de la pluralité des unités distantes en fonction de la capacité de service prédite consistant à :
distribuer la capacité de service de chaque unité distante de la pluralité des unités distantes en fonction de la capacité de service prédite pour chaque période de temps.

8. Procédé de distribution de capacité de service selon la revendication 1, dans lequel la distribution de la capacité de service consiste à :
distribuer la capacité de service de chaque unité distante de la pluralité des unités distantes pour chaque canal de service en fonction du schéma d'utilisation analysé pour chaque canal de service.

9. Sous-système (500) de distribution d'une capacité de service d'un système d'antennes distribuées, le sous-système (500) comprenant :
un module de surveillance (410) conçu pour surveiller un état de fonctionnement de chaque unité distante d'une pluralité d'unités distantes ;
un module d'analyse de schéma (430) conçu pour analyser un schéma d'utilisation pour la pluralité des unités distantes en fonction de l'état de fonctionnement surveillé ; et
un module de distribution de capacité (450) conçu pour distribuer la capacité de service de chaque unité distante de la pluralité des unités distantes en fonction du schéma d'utilisation analysé,
**caractérisé en ce que** l'analyse du schéma d'utilisation consiste à analyser un schéma de mouvement pour une direction de mouvement et une durée de mouvement d'utilisateurs en fonction d'un changement dans une puissance de signal en liaison montante et d'une puissance de signal en liaison descendante entre des unités distantes adjacentes.

10. Sous-système (500) selon la revendication 9, dans lequel le module de surveillance (410) est conçu pour surveiller au moins l'un parmi le débit, la quantité de transmission en liaison montante, la quantité de transmission en liaison descendante et une puissance de fonctionnement de chaque unité de la pluralité des unités distantes.

11. Sous-système (500) selon la revendication 9, dans lequel le module de distribution de service (450) est conçu pour distribuer la capacité de service de chaque unité distance de la pluralité des unités distantes correspondant à une direction conformément au schéma de mouvement en fonction du schéma de mouvement analysé.

12. Sous-système (500) selon la revendication 9, dans lequel le module d'analyse de schéma (430) est conçu pour analyser un schéma de changement d'utilisation dans la couverture de chaque unité distante de la pluralité des unités distantes, en fonction de l'état de fonctionnement dans la couverture de chaque unité distante de la pluralité des unités distantes.

13. Sous-système (500) selon la revendication 12, dans lequel le module de distribution de service (450) est conçu pour distribuer la capacité de service de chaque unité distante de la pluralité des unités distantes correspondant au schéma de changement d'utilisation en fonction du schéma de changement d'utilisation analysé.

14. Sous-système (500) selon la revendication 9, dans lequel le module d'analyse de schéma (430) est conçu pour prédire la capacité de service de chaque unité distante de la pluralité des unités distantes en fonction du schéma d'utilisation analysé, et
le module de distribution de capacité (450) est conçu pour distribuer la capacité de service de chaque unité distante de la pluralité des unités distantes en fonction de la capacité de service prédite.

15. Sous-système (500) selon la revendication 14, dans lequel le module d'analyse de schéma (430) est conçu pour prédire la capacité de service de chaque unité distante de la pluralité des unités distantes pour chaque période de temps, et
le module de distribution de capacité (450) est conçu pour distribuer la capacité de service de chaque unité distante de la pluralité des unités distantes en fonction de la capacité de service prédite pour chaque période de temps.

16. Sous-système (500) selon la revendication 9, dans lequel le module de distribution de service (450) est conçu pour distribuer la capacité de service de chaque unité distante de la pluralité des unités distantes pour chaque canal de service en fonction du schéma d'utilisation analysé pour chaque canal de service.
